# EUROPÄISCHE PATENTANMELDUNG

(11) **EP 1 626 551 A1**
(43) Veröffentlichungstag der Anmeldung: **15.02.2006**
(21) Anmeldenummer: 04019230.4
(22) Anmeldetag: 12.08.2004
(51) Int. Cl.: H04L 29/06

(54) **Verfahren zur Sicherstellung von Authentizität und/oder Vertraulichkeit in einem P2P-Netzwerk**

(71) Anmelder: SIEMENS AKTIENGESELLSCHAFT, 80333 München (DE)
(72) Erfinder: Busser, Jens-Uwe, Dr., 81739 München (DE); Volkmann, Gerald, 81825 München (DE)

(57) **Zusammenfassung**

In modernen Kommunikationsnetzen gewinnt die Kommunikationssicherheit zunehmend an Bedeutung.

Die Gewährleistung von Kommunikationssicherheit kann z.B. mit digitalen Zertifikaten erfüllt werden.

Digitale Zertifikate haben einen bei der Ausstellung festgelegten Gültigkeitszeitraum. Wird der private Schlüssel des Zertifikatseigentümers vor Ablauf dieser Zeit kompromittiert, so muss der Aussteller das Zertifikat möglichst unverzüglich widerrufen, um Missbrauch des Zertifikats zu vermeiden. Zertifikatswiderrufsinformationen können auf externen Servern abgespeichert werden. Diese Lösung hat den Nachteil, dass die Bereitstellung von externen Servern und der Zugriff darauf in Echtzeit notwendig ist, was man bei P2P-Netzen möglichst einschränken möchte. Außerdem sind solche Server ein leichtes Ziel für (Distributed-) Denial-of-Services (DDoS) Angriffe.

Die Erfindung vermeidet die Nachteile dadurch, dass die Zertifikatswiderrufsinformationen als Ressourcen im P2P-Netzwerk abgespeichert werden.

## Beschreibung

Verfahren zur Sicherstellung von Authentizität und/oder Vertraulichkeit in einem P2P-Netzwerk

In modernen Kommunikationsnetzen gewinnt die Kommunikationssicherheit zunehmend an Bedeutung.
Zur Sicherstellung der Authentizität muss es möglich sein, dass ein Netzwerk-Teilnehmer die Authentizität von Nachrichten überprüfen kann, die ein anderer Netzwerk-Teilnehmer signiert hinterlegt hat. Zur Sicherstellung der Vertraulichkeit muss es möglich sein, dass ein Netzwerk-Teilnehmer Nachrichten für einen bzw. mehrere Netzwerk-Teilnehmer vertraulich hinterlegen kann.
Die genannten Forderungen zur Gewährleistung von Kommunikationssicherheit können mit digitalen Signaturen/Zertifikaten erfüllt werden. Dabei erhält jeder zur sicheren Kommunikation autorisierte Netz-Teilnehmer ein eigenes digitales Zertifikat von einer vertrauenswürdigen zentralen Instanz (Certification Authority CA). Diese Zertifikate binden einen öffentlichen Schlüssel an die Identität seines Eigentümers. Diese Zertifikate mit dem öffentlichen Schlüssel der zentralen Instanz können überprüft werden, der im so genannten Root-Zertifikat der zentralen Instanz enthalten ist, welches unverfälscht an alle Netzwerkteilnehmer verteilt werden muss. Ein Netzteilnehmer kann nun mit seinem geheimen privaten Schlüssel eine signierte Nachricht erzeugen, deren Authentizität von jedem Empfänger mittels des öffentlichen Schlüssels aus dem Zertifikat des Netzteilnehmers geprüft werden kann. Das Zertifikat eines Netzteilnehmers erhält der Empfänger entweder von Netz-teilnehmer selbst oder von einem zentralen Server. Zur vertraulichen Übermittlung von Nachrichten werden diese mit dem öffentlichen Schlüssel aus dem Zertifikat des Empfängers verschlüsselt, so dass nur dieser die Nachricht wieder entschlüsseln kann.

In einem Peer-to-Peer Netzwerk, nachfolgend mit P2P Netzwerk abgekürzt, finden Sicherheitsfunktionen wie Authentisierung, Autorisierung und Ver-/Entschlüsselung ebenso Anwendung. Werden danach Informationen aus dem Zertifikat eines Netzteilnehmers benötigt, so kann das Zertifikat von dieser Netzeinheit selbst oder falls vorhanden von einer externen Speichereinheit angefordert werden.

Die bisher beschriebene Authentisierung von Daten oder Nachrichten einer Netzeinheit in einem P2P Netzwerk bringt jedoch den Nachteil mit sich, das ein Zertifikatsserver für die Teilnehmer des P2P Netzwerks zur Verfügung stehen muss und/oder die Netzteilnehmer ständig im Online-Betrieb sich befinden müssen. Darüber hinaus können auch keine vertraulichen Nachrichten für Netzteilnehmer allgemein noch für bestimmte Netzteilnehmer hinterlegt werden, wenn oben genannte Netz- und Netzteilnehmerbedingungen vorliegen.

Zur optimalen Verfügbarkeit dieser Zertifikatsinformationen, ist es daher vorteilhaft, diese Zertifikatsinformationen als Ressourcen im P2P-Netz abzulegen, wo sie von den Einheiten, welche die Zertifikatsinformationen benötigen, angefordert werden können. Das Verfahren dazu wird im Anhang zu dieser Beschreibung erläutert.

Digitale Zertifikate haben einen bei der Ausstellung festgelegten Gültigkeitszeitraum, typischerweise einige Wochen bis hin zu mehreren Jahrzehnten. Wird der private Schlüssel des Zertifikatseigentümers vor Ablauf dieser Zeit kompromittiert, so muss der Aussteller das Zertifikat möglichst unverzüglich widerrufen, um Missbrauch des Zertifikats zu vermeiden Das Zertifikat kann außerdem widerrufen werden, wenn dem Zertifikatseigentümer mit der Ausstellung bestimmte Rechte eingeräumt wurden, die nicht länger gewährt werden sollen.

Der Widerruf eines Zertifikates wird üblicherweise in Client-Server-Architekturen über Zertifikatswiderruflisten (Certificate Revocation Lists CRLs) gemacht: In diesen Listen sind die widerrufenen Zertifikate, eindeutig identifiziert über z. B. ihre Seriennummern, aufgelistet; zusätzlich wird die Liste vom Aussteller signiert, um ihre Authentizität sicherzustellen (siehe Tabelle 1). Um zu überprüfen, ob ein Zertifikat widerrufen wurde, ist es nötig, eine aktuelle Zertifikatswiderrufsliste zu erlangen, um festzustellen, ob das Zertifikat darin enthalten ist.

Zertifikatswiderruflisten können bei Bedarf von Servern, z. B. vom Server der CA (siehe untenstehende Tabelle 1), angefordert werden. Diese Lösung hat den Nachteil, dass die Bereitstellung von externen Servern und der Zugriff darauf in Echtzeit notwendig ist, was man bei P2P-Netzen möglichst einschränken möchte. Außerdem sind solche Server ein leichtes Ziel für (Distributed-) Denial-of-Services (DDoS) Angriffe. Der Zertifikatseigentümer selbst ist auch keine geeignete Instanz zur Verbreitung der Zertifikatswiderrufsinformation, da er möglicherweise sein Zertifikat trotz Widerruf weiterverwenden möchte.

**Tabelle 1: Beispiel für eine Zertifikatswiderrufsliste: Die CA "BeispielCA" widerruft die Zertifikate Nr. 23 und 992, welche sie für die Anwender "Peer A" und "Peer Z" bereits früher einmal ausgestellt hatte.**

| *Ausstellername = BeispielCA* | |
|---|---|
| Username = Peer A | Serialnumber = 0023 |
| Username = Peer Z | Serialnumber = 0992 |
| Signatur von CA | |

Der Erfindung liegt die Aufgabe zugrunde, den bzw. die genannten Nachteile zu überwinden.

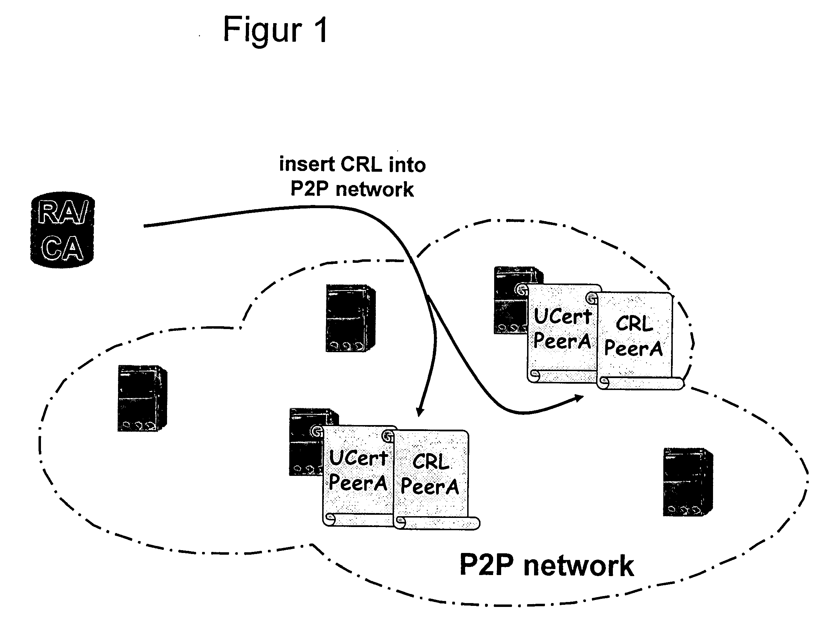

Erfindungsgemäß werden dazu bei P2P-Netzen die Zertifikatswiderrufslisten als Ressourcen im P2P-Netz abgelegt.
Wenn auch die Zertifikate als Ressourcen im P2P-Netz abgelegt werden, dann ist es vorteilhaft, dass man die Zertifikatswiderrufsliste unter dem gleichen Such-Schlüssel-Identifikator (KeyID) ablegt, unter dem auch das widerrufene Zertifikat abgelegt wurde (siehe Figur 1). Dies hat nämlich zur Folge, dass die Liste an den gleichen Stellen, d. h. auf den gleichen Peers, abgelegt wird, an denen das Zertifikat liegt. Das Verfahren zur Abfrage von Zertifikaten aus dem P2P Netzwerk sowie zugehöriger Zertifikatswiderrufslisten wird dadurch wesentlich einfacher, und zugleich performanter und robuster. Legt man Zertifikat und Widerrufsliste unter verschiedenen KeyIDs ab, so sind zwei unabhängige Suchvorgänge notwendig: ein Suchvorgang für das Zertifikat sowie ein weiterer für die Zertifikatswiderrufsliste. Schlägt der Suchvorgang für eine vorhandene Zertifikatswiderrufsliste fehl, so würde ein bereits widerrufenes Zertifikat als noch gültig anerkannt. Werden Zertifikat und Zertifikatswiderrufsliste aber unter der gleichen KeyID abgelegt, so ist nur ein Suchvorgang im P2P Netzwerk notwendig, um sowohl das Zertifikat und als auch - falls vorhanden - die zugehörige Zertifikatswiderrufsliste zu finden. Es kann dann auch nicht vorkommen, dass zwar das Zertifikat gefunden wird, der Suchvorgang aber bei der zugehörigen, vorhandenen Zertifikatsliste scheitert und ein bereits widerrufenes Zertifikat als gültig anerkannt wird.

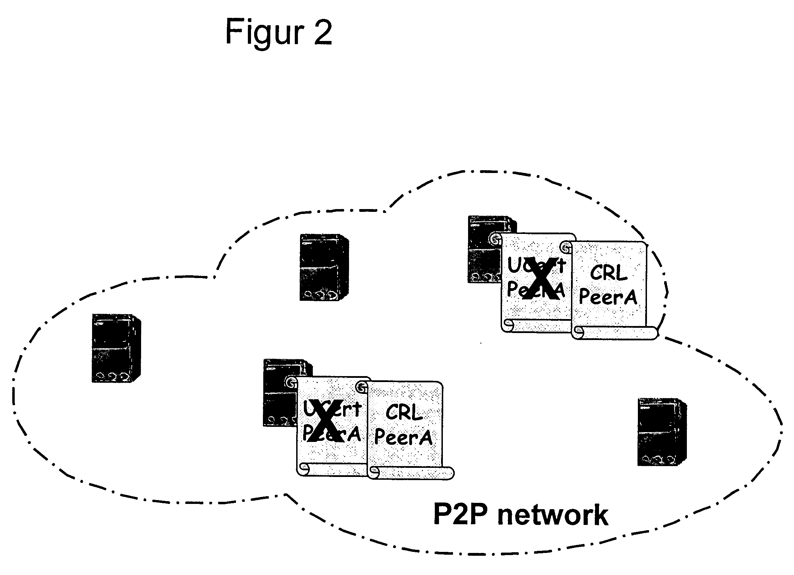

Ein Peer, der eine solche Widerrufsliste von der CA oder einem anderen Peer erhält, prüft zuerst die Authentizität der Widerrufsliste, indem er die darin enthaltene Signatur der CA überprüft. Schlägt diese Überprüfung fehl, so ist die Widerrufsliste ungültig und kann gelöscht werden. Wird die Authentizität bestätigt, so sind die enthaltenen Zertifikate als widerrufen erkannt (siehe Figur 2). Diese Zertifikate dürfen nun nicht mehr verwendet werden, um Dienste im P2P Netzwerk in Anspruch zu nehmen oder um verschlüsselte Nachrichten zu erzeugen. Sie werden als widerrufen markiert.

Enthält die Widerrufsliste nur Aussteller und Seriennummer, während Zertifikate in den Ressourcen aber z.B. nach den Anwendernamen gesucht werden, ist es notwendig, das als widerrufen markierte Zertifikat weiter zu erhalten, um dem Anwender eines widerrufenen Zertifikates weiterhin die Widerrufsliste zuordnen zu können.
Enthält die Widerrufsliste alle notwendigen Daten zur eindeutigen Zuordnung, können die widerrufenen Zertifikate auch gelöscht werden.

Es wird aber bei Zertifikatsanfragen anderer Peers immer mit der Widerrufsliste geantwortet, sofern eine vorhanden ist; ein widerrufenes Zertifikat darf niemals alleine, d.h. ohne die Zertifikatswiderrufsliste, an andere Teilnehmer gesendet werden.

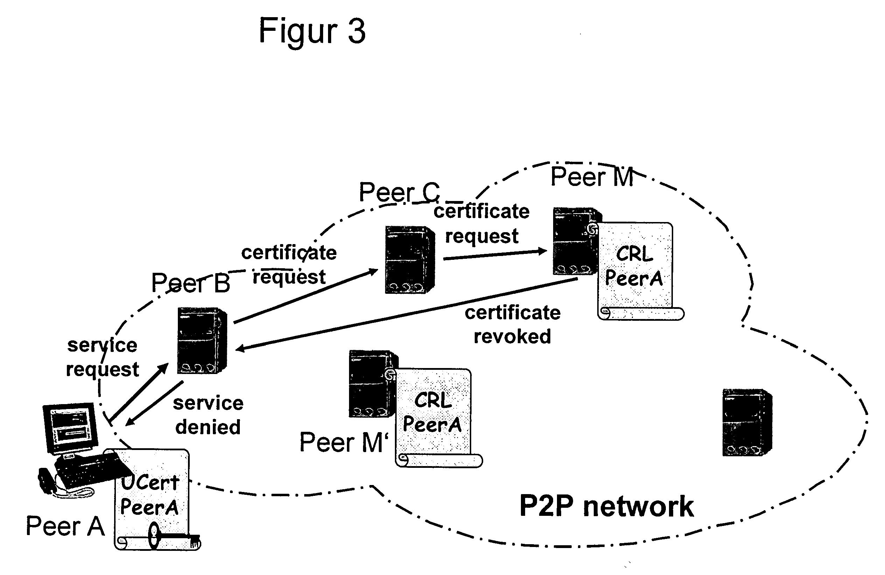

In Figur 3 ist beispielhaft das Erbringen einer Dienstleistung des P2P Netzwerkes für Peer A dargestellt: Peer A sendet dazu eine Dienstanfrage an einen anderen Peer B, der für A die Dienstleistung erbringen soll. Diese Dienstleistung kann z. B. in der Speicherung oder Herausgabe eines gespeicherten Datensatzes bestehen. Peer B benötigt zur Prüfung der Authentizität von Peer A's Anfrage und der Autorisierung von A das Zertifikat von A. Außerdem muss Peer B prüfen, ob das Zertifikat bereits widerrufen wurde. Dazu sucht B nun im P2P Netzwerk nach dem Zertifikat von A (falls es nicht schon von A in der Dienstanfragenachricht mitgeschickt wurde) und gleichzeitig nach einem möglichen Zertifikatswiderruf. Diese Suchanfrage trifft bei Peer M ein, welcher für die Speicherung des Zertifikats sowie für die Speicherung einer möglicherweise vorhandenen Widerrufsliste dieses Zertifikates zuständig ist. Peer M sendet nun das A's Zertifikat an Peer B sowie - falls vorhanden - die Widerrufsliste. Erhält Peer B das Zertifikat zusammen mit einer gültigen Widerrufsliste, so erkennt er das Zertifikat als widerrufen und verweigert die Ausführung der von Peer A gewünschten Dienstleistung. Ist das Zertifikat nicht widerrufen, so wird die Gültigkeit der Dienstanfrage überprüft, und diese dann gegebenenfalls ausgeführt.

Die Zertifikatswiderrufsliste muss im P2P-Netz unter allen KeyIDs aller in ihr enthaltenen Zertifikate abgelegt werden. Enthält die Liste viele Einträge, muss sie an vielen Stellen abgelegt werden; zudem benötigt jede dieser Kopien mehr Speicherplatz als bei einer kurzen Liste. Daher ist es vorteilhaft, wenn der Aussteller für jedes widerrufene Zertifikat eine eigene "Liste" mit nur einem Eintrag erzeugt (siehe Tabelle 2). Die Lebensdauer (lease time) der Ressourcen "Zertifikatswiderrufliste" ist die Gültigkeitsdauer des Zertifikates. Die Bereitstellung von Servern, von denen die Zertifikatswiderrufslisten abgefragt werden können, entfällt völlig.

**Tabelle 2: Beispiel: Die CA "BeispielCA" widerruft die Zertifikate Nr. 23 und 922 der Anwender "Peer A" und "Peer Z" jetzt mittels zwei getrennter, unabhängiger Listen.**

| *Ausstellername = BeispielCA* | |
|---|---|
| Username = Peer A | Serialnumber = 0023 |
| Signatur von CA | |
| Username Peer Z | Serialnumber = 0992 |
| Signatur von CA | |

Erfindungsgemäß erfolgt die Verteilung von Zertifikatswiderrufsinformationen somit ohne spezielle Server.
Die Erfindung ermöglicht außerdem eine hervorragende Verdrängung der "veralteten" Zertifikatsinformationen aus dem P2P-Netzwerk.

### Anhang:

### Ablage von Zertifikatsinformationen als Ressource im P2P-Netz

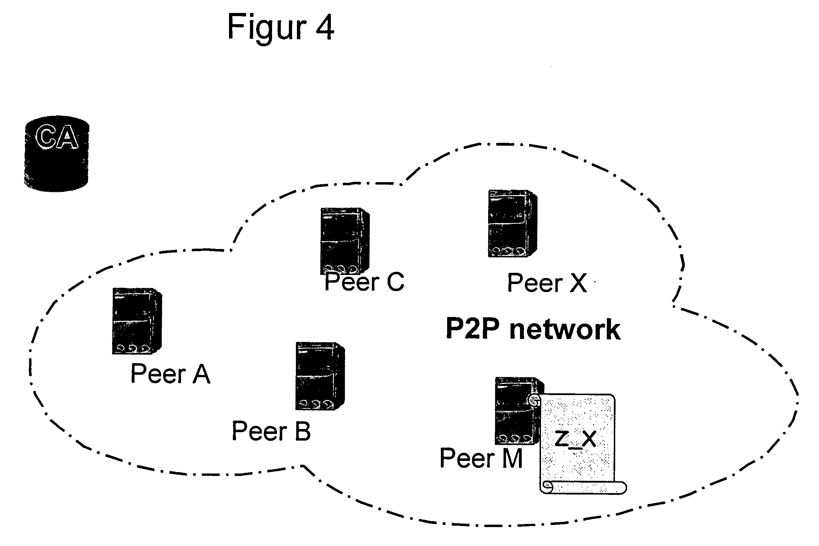

In Figur 4 ist ein beispielhaftes P2P-Netzwerk dargestellt, mit Hilfe dessen im folgenden der Ablauf einer Zertifikatsverteilung erläutert wird.
Zur Zertifikatsverteilung sei vorausgesetzt, dass alle Netzteilnehmer im P2P-Netzwerk ein selbstsigniertes Zertifikat (abgekürzt Z_CA) eines Zertifikatserzeugungsservers CA fest integriert haben. Damit hat jeder Netzteilnehmer einen öffentlichen Schlüssel (kurz Q_CA) des Zertifikatserzeugnisservers CA. Alle Peers A, B,..X,..M haben des weiteren eine Identifikation ID. Diese Identifikation ID ist beispielsweise die Netzwerk-Adresse in dem genannten P2P-Netzwerk. Der Zertifikatserzeugungsserver CA hat das Zertifikat (abgekürzt Z_X) für den Netzteilnehmer Peer X des P2P Netzwerkes erzeugt, d.h. mit seinem privaten Schlüssel (abgekürzt P_CA) des Servers signiert. Dieses Zertifikat bindet einen öffentlichen Schlüssel (abgekürzt Q_X) des Peers X an dessen Identität.

Eine Zertifikatsverteilung erfolgt danach nach folgenden Verfahrensschritten:

Der Zertifikatserzeugungsserver sendet das für den Peer X erzeugte Zertifikat Z_X an einen bestimmten Peer. Im vorliegenden Beispiel sei dieser Peer der Peer A im P2P Netzwerk. Peer A überprüft zunächst die Signatur des Zertifikats Z_X mittels des ihm bekannten öffentlichen Schlüssels Q_CA. Falls die Signatur als ungültig festgestellt wird, wird das Zertifikat nicht weitergeleitet, sondern gelöscht. Auch ist es möglich, dass der Zertifikats-Server selbst ein solcher Netzteilnehmer im P2P-Netzwerk ist.

Als nächstes bestimmt Peer A den Such-Schlüssel- Identifikator ID des Zertifikates Z_X nach einer in P2P Netzwerken üblichen Methode, die vom verwendeten P2P Algorithmus/Protokoll abhängt.

(Einschub: Zu P2P Algorithmen/Protokollen siehe beispielsweise Petar Maymounkov, David Mazieres, New York University, Kademlia: A Peer to Peer Information System Based on XOR Metric, 2001 oder Stoica, Morris, Karger, Kaashoek, Balakrishnan, MIT Laboratory for Computer Science: Chord: A Scalable Peer-to-peer Lookup Service for Internet Applications, August 2001.)

Beispielsweise berechnet der Peer A diesen Such-Schlüssel-Identifikator ID des Zertifikates aus einer eindeutigen Kennzeichnung des Peers X, so dass das Zertifikat allein unter Kenntnis dieser Kennzeichnung im P2P Netz gefunden und extrahiert werden kann.

Als nächstes sucht Peer A innerhalb des P2P-Netzwerkes denjenigen Peer, dessen Identifikator ID mit dem Identifikator ID des Zertifikates am besten übereinstimmt. Dieser sei im vorliegenden Beispiel Peer M. Die genannte Übereinstimmung hinsichtlich der Identifikation bezieht sich dabei auf eine Metrik des P2P-Netzwerksystems: Der Chord- Algorithmus beispielsweise verwendet eine ringförmige Topologie, bei der jeder Peer diejenigen Datensätze speichert, deren Such-Schlüssel-Identifikator mindestens so groß ist wie der eigene Identifikator, aber kleiner als der nächst größere Identifikator eines anderen Peers (d.h. seines "Nachfolgers" im Chord-Ring). Beim Kademlia-Algorithmus dagegen wird die Größe des Unterschiedes zwischen Such-Schlüssel-Identifikator und Peer-Identifikator mittels einer X-OR-Verknüpfung der beiden Werte berechnet; der Peer, bei dem der Unterschied des eigenen Identifikators mit dem Such-Schlüssel-Identifikator des Datensatzes am kleinsten ist, ist für die Speicherung verantwortlich. (Aus Redundanzgründen wird üblicherweise jeder Datensatz nicht nur auf einem Peer M, sondern auf einer Gruppe von Peers gespeichert.)

### Schließlich sendet Peer A das Zertifikat ZX an Peer M.

Peer M überprüft die Signatur des Zertifikates mittels des öffentlichen Schlüssels Q_CA. Ist die Signatur in Ordnung, speichert er das Zertifikat ab, ansonsten wird das Zertifikat gelöscht.

Das Zertifikat von Peer X ist nunmehr im P2P-Netzwerk (genauer gesagt bei Peer M) als Ressource verfügbar, d.h. es kann von jedem Peer, der es benötigt, im P2P-Netzwerk gesucht und extrahiert werden.

Benötigt nun z.B. Peer C das Zertifikat Z X von Peer X, um z.B. die Authentizität einer Nachricht von Netzteilnehmer Peer X zu prüfen, so sucht und extrahiert Peer C das Zertifikat Z_X wie folgt:

Zunächst bestimmt Peer C den Identifikator ID des Zertifikats Z_X nach der im verwendeten P2P Algorithmus festgelegten Methode, und sucht anschließend mit der im verwendeten P2P Algorithmus festgelegten Methode nach einem Peer, dessen Identifikator mit der ID des Zertifikates möglichst gut übereinstimmt, da in dessen Speicher das Zertifikat ZX abgelegt wurde.
Nachdem das Zertifikat Z_X in der Ressource des Peer M gefunden wurde, wird das Zertifikat Z_X an den suchenden Netzteilnehmer Peer C gesendet. Dieser überprüft nun zuerst die Gültigkeit des Zertifikates Z_X mittels des öffentlichen Schlüssels Q_CA aus dem Rootzertifikat Z_CA des Zertifikatserzeugungsservers CA; anschließend prüft er die Authentizität der Nachricht mittels des öffentlichen Schlüssels Q_X, welcher im Zertifikat Z_X enthalten ist. Ist die Authentizität bestätigt, wird die Nachricht bearbeitet; ansonsten wird sie ignoriert.

## Patentansprüche

1. Verfahren zur Sicherstellung der Autorisierung und/oder Authentizität und/oder Vertraulichkeit von Nachrichten in einem P2P-Netzwerk, demgemäß die genannte Sicherstellung mithilfe von Zertifikaten durchgeführt wird,
**dadurch gekennzeichnet,**
**dass** Zertifikatswiderrufsinformationen als Ressourcen im P2P-Netzwerk abgespeichert werden.

2. Verfahren nach Anspruch 1,
**dadurch gekennzeichnet,**
**dass** auch die Zertifikate als Ressourcen im P2P-Netzwerk abgespeichert werden.

3. Verfahren nach Anspruch 2,
**dadurch gekennzeichnet,**
**dass** die Zertifikatswiderrufsinformationen unter den gleichen Such-Schlüssel-Identifikatoren wie die entsprechenden Zertifikate abgespeichert werden.

4. Verfahren nach einem der Ansprüche 1 bis 3,
**dadurch gekennzeichnet,**
**dass** die Zertifikatswiderrufsinformationen in Listen mit jeweils einem Eintrag abgespeichert werden.
